# EUROPÄISCHE PATENTSCHRIFT

(11) **EP 3 453 504 B1**
(45) Veröffentlichungstag und Bekanntmachung des Hinweises auf die Patenterteilung: **12.08.2020**
(21) Anmeldenummer: 17189807.5
(22) Anmeldetag: 07.09.2017
(51) Int. Cl.: B27K 1/00, B27K 1/02, B27L 11/00, B27L 11/02, B27N 1/00, B27N 3/14, B27N 3/18, B01D 11/02

(54) **VERFAHREN ZUR HERSTELLUNG VON OSB-HOLZWERKSTOFFPLATTEN MIT REDUZIERTER EMISSION AN FLÜCHTIGEN ORGANISCHEN VERBINDUNGEN (VOCS)**
METHOD FOR THE PREPARATION OF OSB WOOD-BASE PANELS WITH REDUCED EMISSION OF VOLATILE ORGANIC COMPOUNDS (VOCS)
PROCÉDÉ DE FABRICATION DE PANNEAUX DE LAMELLES ORIENTÉES OSB À FAIBLE ÉMISSION SUR DES COMPOSÉS ORGANIQUES VOLATILS (COV)

(43) Veröffentlichungstag der Anmeldung: 13.03.2019
(73) Patentinhaber: SWISS KRONO Tec AG, 6004 Luzern (CH)
(72) Erfinder: PFEIFFER, Sabrina, 16866 Kyritz (DE); KALWA, Norbert, 32805 Horn-Bad Meinberg (DE)
(74) Vertreter: Maikowski & Ninnemann Patentanwälte Partnerschaft mbB

(56) Entgegenhaltungen:
- WO-A1-2013/107599
- CN-A- 106 272 873
- US-A1- 2009 095 694

## Beschreibung

Die vorliegende Erfindung betrifft ein Verfahren zur Herstellung von OSB-Holzwerkstoffplatten und eine Produktionslinie zur Herstellung von OSB-Holzwerkstoffplatten.

### Beschreibung

Grobspanplatten, auch OSB (oriented strand boards) genannt, sind Holzwerkstoffplatten, die aus langen Spänen (strands) hergestellt werden. OSB-Platten werden zunehmend im Holz- und Fertighausbau eingesetzt, da OSB-Platten leicht sind und trotzdem die an Bauplatten gesetzten statischen Anforderungen erfüllen. So werden OSB-Platten als Bauplatten und als Wand- oder Dachbeplankung oder auch im Fußbodenbereich eingesetzt. Auch sind OSB-Holzwerkstoffplatten bekannt, die aus großformatigen Holzspänen und thermoplastischen Kunststofffolien hergestellt werden (CN 106 272 873 A).

Die Herstellung der OSB-Platten erfolgt in einem mehrstufigen Prozess, wobei zunächst die Späne oder Strands aus entrindetem Rundholz, bevorzugt Nadelhölzer, in Längsrichtung durch rotierende Messer abgeschält werden. Im sich anschließenden Trocknungsvorgang wird die natürliche Feuchtigkeit der Strands bei hohen Temperaturen reduziert. Der Feuchtigkeitsgrad der Strands kann je nach verwendeten Klebstoff variieren, wobei sich die Feuchtigkeit deutlich unter 10% bewegen sollte, um beim späteren Verpressen Spalter zu vermeiden. In Abhängigkeit vom Klebstoff kann eine Benetzung auf eher feuchten Strands oder auf trockenen Strands günstiger sein. Außerdem sollte während des Pressvorganges möglichst wenig Feuchtigkeit in den Strands vorhanden sein, um den während des Pressvorganges entstehenden Dampfdruck weitestgehend zu reduzieren, da dieser die Rohplatte ansonsten zum Platzen bringen könnte.

Im Anschluss an die Trocknung der Strands werden diese in eine Beleimvorrichtung eingeführt, in welcher der Leim bzw. Klebstoff fein verteilt auf die Späne aufgebracht wird. Zur Verleimung werden überwiegend PMDI- (polymeres Diphenylmethandiisocyanat) oder MUPF-Leime (Melamin-Harnstoff-Phenol-Formaldehyd) eingesetzt. Die Leime können in den OSB-Platten auch gemischt eingesetzt werden. Diese Leime werden verwendet, da die OSB-Platten wie oben erwähnt häufig für konstruktive Anwendungen genutzt werden. Dort müssen feuchte- bzw. nässebeständige Leime verwendet werden.

Nach der Beleimung werden die beleimten Strands in Streuapparaturen alternierend längs und quer zur Produktionsrichtung gestreut, so dass die Strands kreuzweise in mindestens drei Schichten angeordnet sind (untere Deckschicht - Mittelschicht - obere Deckschicht). Die Streurichtung von unterer und oberer Deckschicht ist dabei gleich, weichen jedoch von der Streurichtung der Mittelschicht ab. Auch unterscheiden sich die in der Deckschicht und Mittelschicht verwendeten Strands voneinander. So sind die in den Deckschichten verwendeten Strands flächig und die in der Mittelschicht verwendeten Strands weniger flächig bis hin zu spanförmig. Üblicherweise werden bei der Herstellung der OSB-Platten zwei Materialstränge gefahren: einer mit flächigen Strands für die späteren Deckschichten und einer mit "Spänen" für die Mittelschicht. Entsprechend können die Strands in der Mittelschicht qualitativ schlechter sein, da die Biegefestigkeit im Wesentlichen durch die Deckschichten erzeugt wird. Deshalb kann auch Feingut, das beim Zerspanen entsteht, in der Mittelschicht von OSB-Platten verwendet werden. Die prozentuale Verteilung zwischen Mittel- und Deckschicht ist mindestens 70% zu 30%. Im Anschluss an die Streuung der Strands erfolgt ein kontinuierliches Verpressen der selbigen unter hohem Druck und hoher Temperatur von z.B. 200 bis 250°C.

OSB-Platten erfreuen sich nicht zuletzt auf Grund ihrer Nachhaltigkeit immer größerer Beliebtheit und vielfältiger Anwendung, beispielsweise als Konstruktionselement beim Hausbau oder als Schalung im Betonbau. Den Holzwerkstoffen innewohnende hygroskopische Eigenschaften wirken sich bei einigen Anwendungen jedoch nachteilig aus.

Besonders bei einer Verwendung von OSB im Innenbereich wird ein Entweichen von Holzinhaltsstoffen kritisch gesehen. Dies ist insbesondere bei OSB-Platten aus Kiefernholz problematisch, da diese besonders hohe Emission von flüchtigen organischen Verbindungen zeigen.

Im Verlaufe der Herstellung von Holzwerkstoffplatten und insbesondere bedingt durch den Herstellungsprozess der Holzstrands entstehen bzw. werden eine Vielzahl von flüchtigen organischen Verbindungen freigesetzt. Zu den flüchtigen organischen Verbindungen, auch VOC's genannt, gehören flüchtige organische Stoffe, die leicht verdampfen bzw. bereits bei niedrigeren Temperaturen, wie zum Beispiel bei Raumtemperatur, als Gas vorliegen.

Die flüchtigen organischen Verbindungen (VOC) sind entweder bereits im Holzmaterial vorhanden und werden während der Aufarbeitung aus diesem abgegeben oder sie werden nach derzeitigem Erkenntnisstand durch den Abbau von ungesättigten Fettsäuren gebildet, die wiederum Zersetzungsprodukte des Holzes sind. Typische Umwandlungsprodukte, die während der Bearbeitung auftreten, sind zum Beispiel Pentanal und Hexanal, aber auch Octanal, 2-Octenal oder 1-Heptenal. Insbesondere Nadelhölzer, aus denen vorwiegend OSB-Platten hergestellt werden, enthalten große Mengen an Harz und Fetten, die zur Bildung von flüchtigen organischen Terpenverbindungen und Aldehyden führen. VOC, wie die genannten Aldehyde, können jedoch auch bei der Verwendung bestimmter Klebstoffe für die Herstellung der Holzwerkstoffe entstehen bzw. freigesetzt werden.

Die Emission von Inhaltsstoffen bei OSB-Werkstoffplatten ist vor allem deshalb kritisch, weil dieser Werkstoff zum überwiegenden Teil unbeschichtet verwendet wird. Dadurch können die Inhaltsstoffe ungehindert ausdünsten. Außerdem werden die OSB-Platten häufig zur Verkleidung/Beplankung von großen Flächen verwendet, woraus sich meist eine hohe Raumbeladung (m² OSB / m³ Raumluft) ergibt. Dies führt zusätzlich zu einer Aufkonzentration bestimmter Substanzen in der Raumluft.

Um das Problem der VOC-Emission zu lösen, wurden in der Vergangenheit verschiedene Ansätze beschrieben.

So wurde in der Vergangenheit versucht die Emissionen der Aldehyde durch den Zusatz von Reduktionsmitteln zu vermindern. Allerdings waren viele dieser Reduktionsmittel schwefelhaltig, was zu unerwünschten Emissionen von Schwefeldioxid während der Plattenproduktion und in der späteren Nutzung führte.

Auch der Zusatz von Aktivkohle wurde erprobt, ist aber technologisch und unter Kostenaspekten nicht zufriedenstellend. Ein weiterer Ansatz ist die Extraktion von Holzmaterialien, wie Holzmehl, mit Lösungsmittel z.B. Lösungsmittel umfassend Aceton, erwärmtes Wasser, oder Wasser gemischt mit NaOH oder einem anderen Salz (US 2009/0095694 A1).

Die Zugabe von geeigneten VOC-Fängern Stoffen erfolgt fast immer nach dem Trocknungsprozess der Strands, da man diesen bzw. auch die Temperaturbeaufschlagung in der Presse für die auslösenden Gründe des überwiegenden Teils der Emission hielt. Die Zugabe der VOC-Fänger erfolgte in flüssiger Form über das Beleimsystem, Feststoffe wurden an verschiedenen Stellen des Prozesses (z. B. Streuung) zugegeben. Dies erforderte eine zusätzliche Installation von Dosierstationen, die eine homogene Verteilung sicherstellen sollten.

Der Erfindung liegt nunmehr die technische Aufgabe zu Grunde, das an sich bekannte Verfahren zur Herstellung von OSB-Werkstoffplatten dahingehend zu verbessern, um einfach und sicher OSB-Werkstoffplatten mit einer deutlich verringerten Emission von flüchtigen organischen Verbindungen (VOCs) herzustellen. Dabei sollte wenigstens die Emission der Terpene reduziert werden. Wenn möglich, sollte der Herstellprozess so wenig wie möglich verändert werden und die Kosten nicht unverhältnismäßig steigen. Weiterhin sollte die Lösung eine möglichst große Flexibilität beinhalten. Letztlich sollen auch ökologische Aspekte mit in Betracht gezogen werden, d. h. die Lösung sollte keine zusätzlichen Energieverbräuche hervorrufen oder zusätzliche Abfälle erzeugen.

Diese Aufgabe wird erfindungsgemäß durch ein Verfahren ein Verfahren zur Herstellung von OSB-Holzwerkstoffplatten mit den Merkmalen des Anspruchs 1, und einer dafür geeigneten Produktionslinie nach Anspruch 12 gelöst.

Entsprechend wird ein Verfahren zur Herstellung von OSB-Holzwerkstoffplatten, insbesondere von OSB-Holzwerkstoffplatten mit reduzierter Emission an flüchtigen organischen Verbindungen (VOCs), bereitgestellt, wobei die verwendeten Holzstrands in Wasser mit einer Temperatur zwischen 50°C und 100°C, bevorzugt zwischen 60°C und 90°C, insbesondere bevorzugt zwischen 70 und 90°C behandelt werden.

Erfindungsgemäß erfolgt die Behandlung der Holzstrands mit Wasser derart, dass die Wasserbehandlung der Holzstrands über einen Zeitraum von 10 bis 60 min, bevorzugt von 15 bis 45 min, insbesondere bevorzugt von 20 bis 30 min erfolgt.

Somit werden die Holzstrands einer Behandlung mit heißem Wasser über einen vorbestimmten Zeitraum ausgesetzt, wobei die Behandlungsdauer abhängig ist von der Wassertemperatur. Die mit dem heißen Wasser behandelten Holzstrands werden dann zusätzlich oder alternativ zu unbehandelten Holzstrands in den bekannten OSB Herstellungsprozess eingeführt.

Zusätzlich können dem Wasser noch Hilfsstoffe zugegeben werden, die die Löslichkeit der flüchtigen Verbindungen in warmem Wasser verbessert bzw. zu einer teilweisen oder vollständigen chemischen Umwandlung der flüchtigen in nichtflüchtige Verbindungen führt.

Die Behandlung mit heißem Wasser unterstützt eine Reduzierung von flüchtigen organischen Verbindungen in den Holzstrands, da zumindest solche Verbindungen, die eine Löslichkeit in warmem Wasser besitzen, durch die Behandlung ausgewaschen werden und an der OSB zu einer verminderten Emission führen. Die vorliegende Wasserbehandlung kann z.B. im Gegenstromprinzip erfolgen.

Die vorliegende Wasserbehandlung der Holzstrands wird in einer separaten Wasserbehandlungsvorrichtung durchgeführt. Die Wasserbehandlung erfolgt außerhalb eines Zerspaners (z.B. Messerring-Zerspaner oder Scheibenzerspaner) und ist somit nicht Teil des Zerspanungs- oder Zerkleinerungsprozesses von Hölzern zur Herstellung von Holzstrands. Wesentlich ist auch, dass die Wasserbehandlung noch vor der Trocknung der Holzstrands vorgenommen werden kann.

In einer Ausführungsform des vorliegenden Verfahrens erfolgt die Wasserbehandlung der Holzstrands derart, dass die Holzstrands während der Behandlung vollständig vom Wasser bedeckt sind, bevorzugt vollständig in das Wasser eingetaucht sind.

In einer weiteren Ausführungsform des vorliegenden Verfahrens werden die Holzstrands zur Wasserbehandlung mit mindestens einer Transportvorrichtung kontinuierlich durch eine das Wasser enthaltenden Vorrichtung (Behälter, Becken) durchgeführt.

Bevorzugterweise wird das Wasser nach Passieren der Holzstrands aus der Vorrichtung ausgeschleust. Das aus der Vorrichtung ausgeschleuste Wasser weist einen chemischen Sauerstoffbedarf von 300-100 mg/l, bevorzugt 500 bis 700 mg/l auf und gilt somit als lediglich moderat mit organischen Verbindungen belastet.

Das aus der Vorrichtung ausgeschleuste Wasser kann einem Reinigungsschritt unterzogen werden und nach der Reinigung in die Vorrichtung zur Wasserbehandlung zurückgeführt werden. Die Reinigungsschritte umfassen vorteilhaftweise eine Filtration zur Entfernung von Schwebstoffen und feinen Partikeln und/oder eine Ausfällung von gelösten Bestandteilen unter Verwendung von geeigneten Fällungsmitteln.

Die vorliegend verwendeten Holzstrands können eine Länge zwischen 50 bis 200 mm, bevorzugt 70 bis 180 mm, insbesondere bevorzugt 90 bis 150 mm; eine Breite zwischen 5 bis 50 mm, bevorzugt 10 bis 30 mm, insbesondere bevorzugt 15 bis 20 mm; und eine Dicke zwischen 0,1 und 2 mm, bevorzugt zwischen 0,3 und 1,5 mm, insbesondere bevorzugt zwischen 0,4 und 1 mm aufweisen.

In einer Ausführungsform weisen die Holzstrands z.B. eine Länge zwischen 150 und 200 mm, eine Breite zwischen 15 und 20 mm, eine Dicke zwischen 0,5 und 1 mm und eine Feuchte von max. 50% auf.

Die Wasserbehandlung der Holzstrands wird in einer Vorrichtung (Bewässerungseinheit) durchgeführt, die folgende Elemente bzw. Merkmale umfasst:
- mindestens einen mit Wasser gefüllten Behälter;
- mindestens eine Transportvorrichtung zum Transportieren der Holzstrands durch den Behälter; und
- mindestens eine Vorrichtung zum Eintauchen der Holzstrands in das Wasser.

In einer Variante kann der mindestens eine mit Wasser gefüllte Behälter in Form eines Tauchbeckens mit mindestens einem Wasserzulauf und mindestens einem Wasserablauf ausgeführt sein. Wie oben ausgeführt, kann das Waschwasser nach Reinigung (Filtration, Fällung) wieder in den Wasserbehälter rückgeführt werden; d.h. das Wasser wird in der vorliegenden Vorrichtung im Kreislauf geführt.

Die zu waschenden OSB Strands werden durch den Wasserbehälter mittels einer oder mehrerer Transportwalzen bewegt. Bevorzugt werden drei oder mehr Transportwalzen in Abhängigkeit von der Größe des Wasserbehälters und der Menge der OSB Strands verwendet.

Das Volumen der Bewässerungseinheit, insbesondere des Wasserbehälters, kann zwischen 20 m³ und 100 m³, bevorzugt zwischen 30 m³ und 80 m³, insbesondere bevorzugt zwischen 50 m³ und 70 m³ betragen. Bei einer Produktion von 1600 m³ OSB am Tag, was ca. 66 m³/h bedeutet, und einer Verweilzeit von ca. 15 min wird z.B. von eine Beckengröße von mindestens 50 m³ benötigt, wobei dabei die Komplettbehandlung aller Strands für die OSB angenommen wird. Falls nur die DS- oder MS-Strands behandelt werden sollen, wird entsprechend weniger Beckenvolumen benötigt. Die Größe des Beckens nimmt auch Rücksicht auf die "Schüttdichte" der Strands im Wasser.

Die Verweilzeit der OSB Strand im Wasserbehälter beträgt zwischen 10 und 30 min, bevorzugt zwischen 15 und 20 min. Bei einer angenommenen Grundfläche von 20 m² (Länge: 8 m, Breite: 2,5 m, Höhe: 2,5 m), würde eine Verweilzeit von 15 min einer Geschwindigkeit von ca. 0,5 m/min entsprechen.

Da das Wasser als Transportmedium dient, liegt e die Fliessgeschwindigkeit des Wassers ebenfalls bei 0,2 bis 1 m/min, bevorzugt bei ca. 0,5 m/min.

Die Vorrichtung zum Eintauchen der Holzstrands in das Wasser kann z.B. in Form eines Niederhalters ausgebildet sein, der sicherstellt, dass die Holzstrands sich vollständig unter Wasser befinden.

Das Eintragen und Austragen der OSB Strand in und aus dem Wasserbehälter erfolgt in geeigneter Weise über Schrägen, die in einem geeigneten Winkel im Wasserbehälter vorgesehen sind.

Nach Verlassen der Wasserbehandlungsvorrichtung weisen die wasserbehandelten Strands eine Temperatur von 50 bis 70 °C auf. Mit dieser Temperatur treten die Holzstrands aus der Wasserbehandlungsvorrichtung in einen Trockner (als Teil der Produktionslinie für OSB-Platten ein), was zu einer Steigerung der Trocknerleistung führt. Damit wird die Energie, die zur Entfernung von Holzinhaltstoffen gebraucht wird, dann weiter für den Trocknungsprozess genutzt. In einem normalen Prozess liegt die Eintrittstemperatur der Strands in den Trockner bei ca. 25°C.

Das erfindungsgemäße Verfahren zur Herstellung von OSB-Holzwerkstoffplatten mit reduzierter Emission an flüchtigen organischen Verbindungen (VOCs) umfasst die folgenden Schritte:
a) Herstellen von Holzstrands aus geeigneten Hölzern;
b) Behandeln von zumindest einem Teil der Holzstrands mit Wasser gemäß dem oben beschriebenen Verfahren;
c) Trocknen der mit dem Wasser behandelten Holzstrands;
d) Beleimen der mit Wasser behandelten und getrockneten Holzstrands und optional Beleimen von nicht mit Wasser behandelten Holzstrands mit mindestens einem Bindemittel;
e) Aufstreuen der beleimten Holzstrands auf ein Transportband; und
f) Verpressen der beleimten Holzstrands zu einer OSB-Holzwerkstoffplatte.

Das vorliegende Verfahren ermöglicht die Herstellung von OSB-Holzwerkstoffplatten unter Verwendung von wasserbehandelten Holzstrands, die zusätzlich oder alternativ zu unbehandelten Holzstrands in einen bekannten Herstellungsprozess eingeführt werden. Eine mit dem erfindungsgemäßen Verfahren hergestellte OSB-Holzwerkstoffplatte umfassend wasserbehandelte Holzstrands weist eine verminderte Emission von flüchtigen organischen Verbindungen, insbesondere von Terpenen und Aldehyden auf.

Durch die Bereitstellung des vorliegenden Verfahrens ergeben sich verschiedene Vorteile. So ist eine einfache Herstellung der OSB-Holzwerkstoffplatten ohne wesentliche Beeinflussung der üblichen Prozesskette bei deutlich verminderter Emission flüchtiger organischer Verbindungen aus dem OSB möglich. Zusätzlich kann der Energiebedarf zum Trocknen der Holzstrands reduziert werden, da die Holzstrands beim Eintritt in den Trockner bereits eine erhöhte Temperatur (z.B. von ca. 50-70°C) aufweisen; d.h. der bei der Wasserbehandlung erfolgte Energieeinsatz unterstützt den Trocknungsprozess.

Die Herstellung von OSB wird bei dem vorliegenden Prozess im Vergleich zu den konventionellen OSB-Herstellungsverfahren dahingehend verändert, dass zumindest ein Teil der verwendeten Strands nach der Herstellung noch vor der Trocknung mit Wasser behandelt werden. Bei den Strands kann es sich um diejenigen handeln, die für die Deck- oder Mittelschicht vorgesehen handeln. Nach der Behandlung werden die Strands der standardmäßig durchgeführten Trocknung zugeführt. Dies erfolgt z. B. unmittelbar vor der Beleimung, wobei eine vollständige Substitution oder auch nur eine teilweise Substitution der Standardstrands erfolgen kann.

In einer weiteren Ausführungsform des vorliegenden Verfahrens werden wasserbehandelte Holzstrands oder eine Mischung aus wasserbehandelten Holzstrands und nicht-wasserbehandelten Holzstrands als Mittelschicht und/oder Deckschicht der OSB-Holzwerkstoffplatte verwendet.

Demnach ist in einer Variante eine vollständige Substitution der Holzstrands möglich, wobei die wasserbehandelten Holzstrands in der Mittelschicht, und in einer oder beiden Deckschichten oder auch in sämtlichen Schichten verwendet werden.

In einer anderen Variante ist es möglich, lediglich die Mittelschicht aus wasserbehandelten Holzstrands zu bilden und für eine oder beide Deckschichten nicht-wasserbehandelte Holzstrands zu verwenden. Da wasserbehandelte Holzstrands eine hellere Farbe haben, kann es entsprechend vorteilhaft sein, in der Deckschicht wasserbehandelte Holzstrands einzusetzen. Diese geben der OSB somit eine ansprechendere Farbe.

In einer noch weiteren Variante werden lediglich eine oder beide Deckschichten aus wasserbehandelten Holzstrands gebildet und für die Mittelschicht werden ggf. getrocknete und nicht-wasserbehandelte Holzstrands verwendet.

In einer noch weiteren Variante ist es denkbar und möglich, für die Mittel- und Deckschichten jeweils ein Gemisch mit beliebigen Verhältnis von wasserbehandelten Holzstrands und nicht-wasserbehandelten Holzstrands zu verwenden. In solch einem Fall kann das Gemisch zwischen 10 und 50 Gew%, bevorzugt zwischen 20 und 30 Gew% an unbehandelten bzw. nicht- wasserbehandelten Holzstrands und zwischen 50 und 90 Gew%, bevorzugt zwischen 70 und 80 Gew% an wasserbehandelten Holzstrands umfassen.

In einer weiteren Ausführungsvariante kann der Schritt der Wasserbehandlung der Holzstrands separat von dem Herstellungsprozess der OSB-Holzwerkstoffplatten durchgeführt werden. Demnach erfolgt die Wasserbehandlung in dieser Ausführungsvariante des vorliegenden Verfahrens außerhalb des Gesamtprozesses bzw. der Prozesslinie. Die Holzstrands werden hierbei aus dem Herstellungsprozess ausgeschleust und in die Wasserbehandlungsvorrichtung (z.B. Tauchbecken) eingeführt. Anschließend können die wasserbehandelten Holzstrands ggf. nach einer Zwischenlagerung z.B. unmittelbar vor der Beleimung wieder in den herkömmlichen Herstellungsprozess eingeschleust werden. Dies ermöglicht eine hohe Flexibilität im Herstellungsverfahren.

Die Wasserbehandlung der Holzstrands kann in einer noch weiteren Ausführungsvariante in den Herstellungsprozess der OSB-Holzwerkstoffplatten integriert sein, d.h. der Schritt der Wasserbehandlung ist in den Gesamtprozess bzw. Prozesslinie eingegliedert und erfolgt online.

In diesem Falle kann die Wasserbehandlung i) unmittelbar nach der Zerspanung und Bereitstellung der Holzstrands erfolgen oder ii) erst nach dem Sichten und Separieren der Holzstrands entsprechend der Verwendung der Holzstrands für Mittel- oder Deckschicht. Im letzteren Fall kann eine separate Wasserbehandlung der Holzstrands entsprechend den Erfordernissen für die in Mittel- und Deckschicht verwendeten Holzstrands erfolgen.

In einer weitergehenden Variante des vorliegenden Verfahrens wird die Wasserbehandlung der Holzstrands in mindestens einer Wasserbehandlungsvorrichtung, bevorzugt in zwei Wasserbehandlungsvorrichtung durchgeführt. Die vorliegend zum Einsatz kommende Wasserbehandlungsvorrichtung kann als Batch-Anlage oder als kontinuierlich betriebene Anlage vorliegen bzw. funktionieren, wobei eine kontinuierlich betriebene Anlage bevorzugt ist.

Wie bereits oben angemerkt, kann die Wasserbehandlung von für die Mittelschicht und die Deckschichten der OSB-Holzwerkstoffplatte verwendeten Holzstrands jeweils separat in mindestens zwei Wasserbehandlungsvorrichtungen durchgeführt werden. Dies ermöglicht eine Anpassung des Grades der Wasserbehandlung der in der Mittel- und/oder Deckschicht verwendeten wasserbehandelten Holzstrands an die jeweiligen Erfordernisse und Kundenwünsche. Die zwei verwendeten Wasserbehandlungsvorrichtungen sind in diesem Fall bevorzugt parallel geschaltet bzw. angeordnet.

Das In-Kontaktbringen der Holzstrands mit dem mindestens einen Bindemittel in Schritt d) erfolgt bevorzugt durch Aufsprühen bzw. Verdüsen des Bindemittels auf die Holzstrands. So arbeiten viele OSB-Anlagen mit rotierenden Coils (Trommeln mit Atomizer-Beleimung). Eine Mischerbeleimung wäre auch möglich. Dabei werden die Strands in einem Mischer durch sich drehende Schaufeln innig mit dem Leim vermischt.

In einer Ausführungsform des vorliegenden Verfahrens wird bevorzugt ein Polymerklebstoff als Bindemittel verwendet, der ausgewählt ist aus der Gruppe enthaltend Formaldehyd-Klebstoffe, wie Harnstoff-Formaldehyd Harz-Klebstoff (UF) und/oder Melamin-Formaldehyd Harz Klebstoff (MF), Polyurethan-Klebstoffe, Epoxidharz-Klebstoffe, Polyester-Klebstoffe. Vorliegend ist die Verwendung eines Polyurethan-Klebstoffes bevorzugt, wobei der Polyurethan-Klebstoff auf der Basis von aromatischen Polyisocyanaten, insbesondere Polydiphenylmethandiisocyanat (PMDI), Toluylendiisocyanat (TDI) und/oder Diphenylmethandiisocyanat (MDI) vorliegt, wobei PMDI besonders bevorzugt ist.

In einer Variante des vorliegenden Verfahrens werden die wasserbehandelten und nicht-wasserbehandelten Holzstrands mit einer Bindemittelmenge von 1,0 bis 5,0 Gew%, bevorzugt 2 bis 4 Gew%, insbesondere 3 Gew% (bezogen auf die Gesamtmenge der Holzstrands) beleimt.

Es ist ebenfalls möglich, zusammen oder separat mit dem Bindemittel den Holzstrands mindestens ein Flammschutzmittel zuzuführen. Das Flammschutzmittel kann typischerweise in einer Menge zwischen 1 und 20 Gew%, bevorzugt zwischen 5 und 15 Gew%, insbesondere bevorzugt ≥10 Gew% bezogen auf die Gesamtmenge der Holzstrands zugegeben werden. Typische Flammschutzmittel sind ausgewählt aus der Gruppe umfassend Phosphate, Sulfate Borate, insbesondere Ammoniumpolyphosphat, Tris(tri-bromneopentyl)phosphat, Zinkborat oder Borsäurekomplexe von mehrwertigen Alkoholen.

Die beleimten (wasserbehandelten und/oder nicht- wasserbehandelten) Holzstrands werden auf ein Transportband unter Ausbildung einer ersten Deckschicht längs zur Transportrichtung, anschließend unter Ausbildung einer Mittelschicht quer zur Transportrichtung und abschließend unter Ausbildung einer zweiten Deckschicht längs zur Transportrichtung aufgestreut.

Nach dem Aufstreuen erfolgt das Verpressen der beleimten Holzstrands bei Temperaturen zwischen 200 und 250°C, bevorzugt 220 und 230°C zu einer OSB-Holzwerkstoffplatte.

In einer ersten bevorzugten Ausführungsform umfasst das vorliegende Verfahren zur Herstellung einer OSB-Holzwerkstoffplatte mit reduzierter VOC-Emission die folgenden Schritte:
- Herstellen von Holzstrands aus geeigneten Hölzern, insbesondere mittels Zerspanen von geeigneten Hölzern,
- Behandeln von der Holzstrands mit Wasser mit einer Temperatur zwischen 70°C und 90°C;
- Trocknen der mit dem Wasser behandelten Holzstrands;
- Sichten und Separieren der wasserbehandelten Holzstrands in Holzstrands geeignet zur Verwendung als Mittelschicht und Deckschicht;
- Beleimen der separierten Holzstrands;
- Aufstreuen der beleimten wasserbehandelten Holzstrands auf ein Transportband in der Reihenfolge: erste untere Deckschicht, Mittelschicht und zweite obere Deckschicht; und
- Verpressen der beleimten Holzstrands zu einer OSB-Holzwerkstoffplatte.

In einer zweiten bevorzugten Ausführungsform umfasst das vorliegende Verfahren zur Herstellung einer OSB-Holzwerkstoffplatte mit reduzierter VOC-Emission die folgenden Schritte:
- Herstellen von Holzstrands aus geeigneten Hölzern, insbesondere mittels Zerspanen von geeigneten Hölzern;
- Sichten und Separieren der Holzstrands in Holzstrands geeignet zur Verwendung als Mittelschicht und Deckschicht;
- Behandeln der für die Mittelschicht vorgesehenen Holzstrands und/oder der für die Deckschicht(en) vorgesehenen Holzstrands mit Wasser mit einer Temperatur zwischen 70°C und 90°C;
- Trocknen der mit dem Wasser behandelten Holzstrands;
- Beleimen der separierten wasserbehandelten Holzstrands und Beleimen von nicht-wasserbehandelten Holzstrands;
- Aufstreuen der beleimten wasserbehandelten und nicht-wasserbehandelten Holzstrands auf ein Transportband in der Reihenfolge: erste untere Deckschicht, Mittelschicht und zweite obere Deckschicht; und
- Verpressen der beleimten Holzstrands zu einer OSB-Holzwerkstoffplatte.

Entsprechend ermöglicht das vorliegende Verfahren die Herstellung einer OSB-Holzwerkstoffplatte mit reduzierter Emission an flüchtigen organischen Verbindungen (VOCs), welche wasserbehandelte Holzstrands umfasst.

Die vorliegende OSB-Holzwerkstoffplatte kann dabei vollständig aus wasserbehandelten Holzstrands oder aus einem Gemisch von wasserbehandelten und nicht-wasserbehandelten Holzstrands bestehen. In einer Ausführungsform bestehen beide Deckschichten und die Mittelschicht der OSB aus wasserbehandelten Holzstrands, in einer weiteren Ausführungsform bestehen die beiden Deckschichten aus nicht-wasserbehandelten Holzstrands und die Mittelschicht aus wasserbehandelten Holzstrands und in einer noch weiteren Ausführungsform bestehen die beiden Deckschichten aus wasserbehandelten Holzstrands und die Mittelschicht aus nicht-wasserbehandelten Holzstrands.

Die vorliegende OSB-Holzwerkstoffplatte kann eine Rohdichte zwischen 300 und 1000 kg/m³, bevorzugt zwischen 500 und 800 kg/m³, insbesondere bevorzugt zwischen 500 und 650 kg/m³ aufweisen.

Die Dicke der vorliegenden OSB-Holzwerkstoffplatte kann zwischen 5 und 50 mm, bevorzugt zwischen 10 und 40 mm betragen, wobei insbesondere eine Dicke zwischen 15 und 25 mm bevorzugt ist.

Die mit dem vorliegenden Verfahren hergestellte OSB-Holzwerkstoffplatte weist insbesondere eine reduzierte Emission von während des Holzaufschlusses freigesetzten Aldehyden, insbesondere Pentanal oder Hexanal, und/oder Terpenen, insbesondere Caren und Pinen auf.

Die Freisetzung von Aldehyden erfolgt während des Zerspanungsprozesses und einer damit verbundenen wässrige Aufarbeitung und Reinigung der Holzstrands. Dabei können spezifische Aldehyde aus den Grundbausteinen der Zellulose oder Hemizellulose gebildet werden. So wird z.B. der Aldehyd Furfural aus Mono-und Disacchariden der Zellulose bzw. Hemizellulose unter sauren Bedingungen und Temperatureinwirkung gebildet, während aromatische Aldehyde aus Lignin freigesetzt werden können. Die aliphatischen Aldehyde ( gesättigt und ungesättigt) werden durch die Fragmentierung von Fettsäuren unter Beteiligung von Sauerstoff gebildet.

Aufgrund des Einsatzes von wasserbehandelten Holzstrands erfolgt eine Reduzierung der Emission von C₂-C₁₀ Aldehyden, insbesondere bevorzugt von Acetaldehyd, Pentanal, Hexanal oder auch Furfural, sowie eine Reduzierung von freigesetzten Terpenen, insbesondere C₁₀-Monoterpene und C₁₅-Sesquiterpene, insbesondere bevorzugt acyclische oder cyclische Monoterpene in den OSB-Holzwerkstoffplatten.

Typische acyclische Terpene sind Terpenkohlenwasserstoffe wie Myrcen, Terpenalkohole wie Gerianol, Linaool, Ipsinol und Terpenaldehyde wie Citral. Typische Vertreter der monocyclischen Terpene sind p-Menthan, Terpeninol, Limonen oder Carvon, und typische Vertreter der bicyclischen Terpene sind Caran, Pinan, Bornan, wobei insbesondere 3-Caren und α-Pinen von Bedeutung sind. Terpene sind Bestandteile der Baumharze und von daher besonders in sehr harzhaltigen Baumarten wie Kiefer oder Fichte vorhanden.

Insbesondere die starke Reduzierung der Aldehyde (und auch Aceton) war für den Fachmann in keiner Weise vorhersehbar. So kann zwar angenommen werden, dass sich während der Wasserbehandlung Wasser an die Doppelbindungen der ungesättigten Fettsäuren anlagert und so eine Aldehydbildung vermieden wird. Derartige Additionen verlaufen jedoch üblicherweise wegen der geringen Elektrophilie von Wasser nur in Anwesenheit von Mineralsäuren (Schwefelsäure, Phosphorsäure usw.) bei höheren Temperaturen. Zudem ist Wasser nicht als gutes Reduktionsmittel bekannt.

Das vorliegende Verfahren wird in einer Produktionslinie zur Herstellung einer OSB-Platte durchgeführt und umfasst die vorliegenden Elemente:
- mindestens eine Vorrichtung zum Entrinden von geeigneten Holzstämmen;
- mindestens einen Zerspaner zum Zerspanen der entrindeten Holzstämmen in Holzstrands;
- mindestens eine oben beschriebene Vorrichtung zur Wasserbehandlung von mindestens einem Teil der Holzstrands;
- mindestens einen Trockner zum Trocknen der wasserbehandelten Holzstrands;
- mindestens eine Vorrichtung zum Sichten und Separieren der Holzstrands (wasserbehandelt und nicht-wasserbehandelt);
- mindestens eine Vorrichtung zum Beleimen der Holzstrands;
- mindestens eine Vorrichtung zum Streuen der beleimten Holzstrands auf ein Transportband, und
- mindestens eine Presse zum Verpressen der gestreuten Holzstrands zu OSB.

Wie oben bereits angemerkt, kann die Wasserbehandlungsvorrichtung kontinuierlich ausgelegt sein. Hierzu werden die Holzstrands auf ein Transportband aufgebracht, welches die Holzstrands mit einer vorgegeben Geschwindigkeit durch die Wasserbehandlungsvorrichtung (z.B. in Form eines Tauchbehälters) geführt. Während des Durchlaufs durch die Wasserbehandlungsvorrichtung werden die Holzstrands gleichmäßig in das heiße Wasser eingetaucht.

Die Wasserbehandlungsvorrichtung kann vor (stromaufwärts) der Vorrichtung zum Sichten und Separieren der Holzstrands vorgesehen sein. In diesem Falle werden alle Holzstrands einer Wasserbehandlung ausgesetzt.

Es ist aber auch möglich, dass zwei Wasserbehandlungsvorrichtungen hinter (stromabwärts) der Vorrichtung zum Sichten und Separieren der Holzstrands vorgesehen sind. In diesem Falle dient eine Wasserbehandlungsvorrichtung der Wasserbehandlung der Holzstrands, die für die Mittelschicht vorgesehen sind, und die andere Wasserbehandlungsvorrichtung dient der Wasserbehandlung der Holzstrands, die für die Deckschichten vorgesehen sind. Dies ermöglicht eine wahlweise Wasserbehandlung der Holzstrands für die Mittelschicht oder der Holzstrands für die Deckschichten.

Die Erfindung wird nachfolgend unter Bezugnahme auf die Figur der Zeichnung an einem Ausführungsbeispiel näher erläutert. Es zeigen:
- Figur 1: eine schematische Darstellung einer Ausführungsform einer Vorrichtung zur Wasserbehandlung von Holzstrands;
- Figur 2: eine schematische Darstellung einer ersten Ausführungsform des erfindungsgemäßen Verfahrens zur Herstellung von OSB-Platten, und
- Figur 3: eine schematische Darstellung einer zweiten Ausführungsform des erfindungsgemäßen Verfahrens.

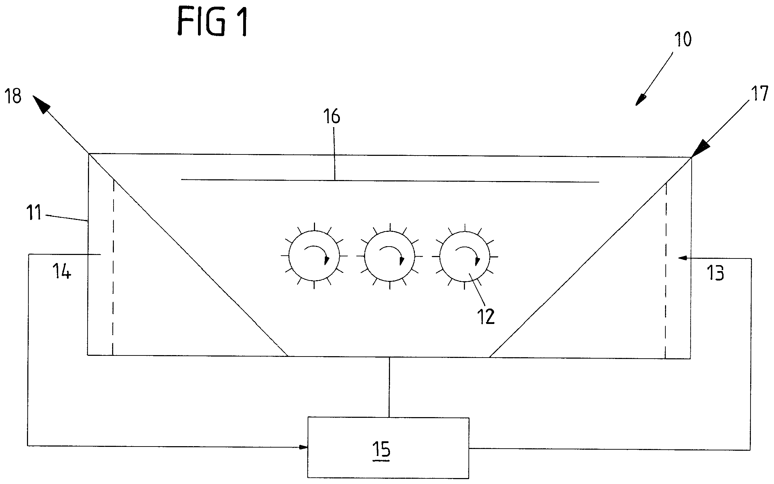

Figur 1 zeigt eine Variante einer Vorrichtung (Bewässerungseinheit) 10 zur Wasserbehandlung von Holzstrands. Die Vorrichtung umfasst ein mit Wasser gefülltes Tauchbecken 11 mit einer Transportvorrichtung in Form von drei Transportwalzen 12.

Die vorliegende Vorrichtung 10 ermöglicht eine Wasserbehandlung der Strands noch vor der Trocknung der Strands im Trommeltrockner. Dabei können alle oder Teile der Strands, die für die spätere Herstellung der OSB vorgesehen sind, behandelt werden.

Das Tauchbecken 11 weist einen Wasserzulauf 13 und einen Wasserablauf 14 auf. Das durch den Wasserablauf 14 ausgeschleuste Wasser kann in einer Reinigungsvorrichtung 15 einem Reinigungsschritt (wie Filtration oder Ausfällung von Verunreinigungen) unterzogen werden, dabei gleichzeitig erwärmt werden und über den Wasserzulauf 13 wieder in das Tauchbecken zurückgeführt werden.

Die Verwendung eines Niederhalters 16 stellt sicher, dass die Holzstrands sich vollständig unter Wasser befinden und somit vollständig von Wasser umgeben sind

Das Eintragen und Austragen der OSB Strand in und aus dem Tauchbecken 11 erfolgt in geeigneter Weise über Schrägen 17, 18., die in einem geeigneten Winkel im Tauchbecken 11 vorgesehen sind.Die perforierten Bleche ermöglichen eine Abtrennung des Wassers von den Strands.

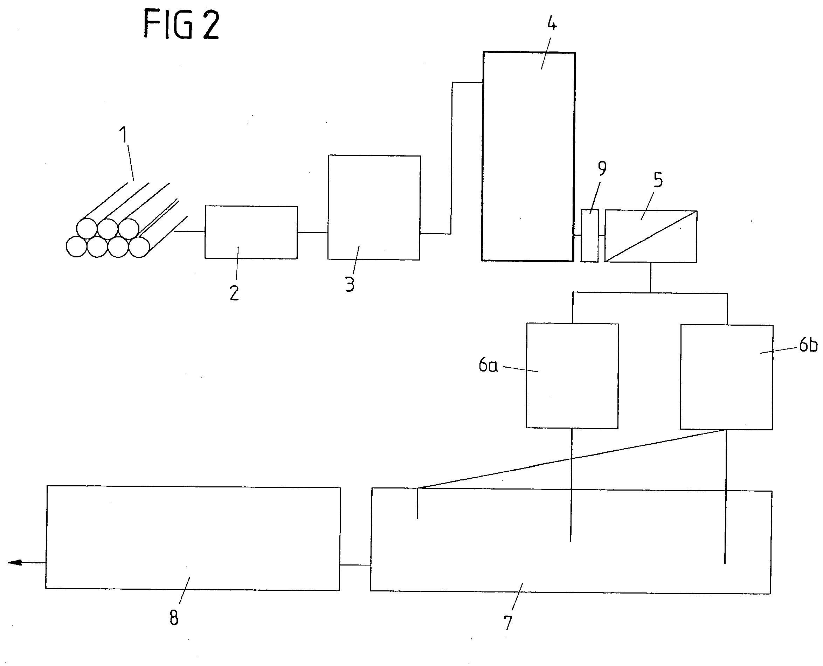

Die in Figur 2 gezeigte erste Ausführungsform des erfindungsgemäßen Verfahrens beschreibt die einzelnen Verfahrensschritte beginnend mit dem Bereitstellen des Holzausgangsproduktes bis zur fertigen OSB-Holzwerkstoffplatte.

Entsprechend wird zunächst in Schritt 1 geeignetes Holzausgangsmaterial zur Herstellung der Holzstrands bereitgestellt. Als Holzausgangsmaterial sind sämtliche Nadelhölzer, Laubhölzer oder auch Mischungen davon geeignet.

Das Entrinden (Schritt 2) und das Zerspanen (Schritt 3) des Holzausgangsmaterials erfolgt in hierfür geeigneten Zerspanern, wobei die Größe der Holzstrands entsprechend gesteuert werden kann. Nach Zerkleinerung und Bereitstellung der Holzstrands werden diese ggf. einem Vortrocknungsprozess unterzogen, wobei eine Feuchte von 5-10 % in Bezug auf die Ausgangsfeuchte der Holzstrands eingestellt wird (nicht gezeigt).

Im Falle der in Figur 2 gezeigten Ausführungsform werden die Holzstrands in eine Wasserbehandlungsvorrichtung eingeführt (Schritt 4). Die Wasserbehandlung der Holzstrands erfolgt mit heißem Wasser in einem Temperaturbereich zwischen 70°C und 90°C.

Das dabei entstehende Waschwasser kann aus dem Prozess ausgeschleust werden und nach einem oder mehreren Reinigungsschritten der Wasserbehandlung wieder zugeführt werden und somit recycelt werden.

Nach Abschluss der Wasserbehandlung, die im vorliegenden Fall ca. 15-30 Minuten dauert, werden die wasserbehandelten Holzstrands getrocknet (Schritt 9), gesichtet und separiert (Schritt 5).

Es erfolgt eine Separierung in Holzstrands zur Verwendung als Mittelschicht (Schritt 6a) oder als Deckschicht (Schritt 6b) mit jeweiliger Beleimung.

Die beleimten wasserbehandelten Holzstrands werden auf ein Transportband in der Reihenfolge erste untere Deckschicht, Mittelschicht und zweite obere Deckschicht aufgestreut (Schritt 7) und anschließend zu einer OSB-Holzwerkstoffplatte verpresst (Schritt 8).

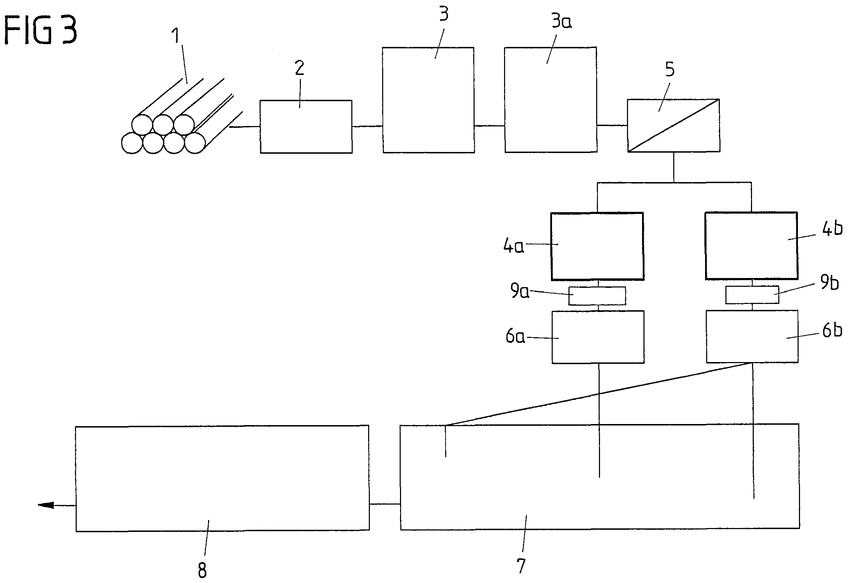

In der in Figur 3 gezeigten zweiten Ausführungsform wird das Holzausgangsmaterial in Analogie zu Figur 1 zunächst bereitgestellt (Schritt 1), entrindet (Schritt 2) und zerspant (Schritt 3). Die Holzstrands werden ggf. einem Vortrocknungsprozess unterzogen, wobei eine Feuchte von 5-10 % in Bezug auf die Ausgangsfeuchte der Holzstrands eingestellt wird (Schritt 3a).

Im Unterschied zu der Ausführungsvariante der Figur 2 erfolgt bereits nach der optionalen Trocknung eine Separierung in Holzstrands zur Verwendung als Mittelschicht oder als Deckschicht (Schritt 5).

Daran schließt sich die Wasserbehandlung der für die Mittelschicht vorgesehenen Holzstrands (Schritt 4a) und/oder Wasserbehandlung der für die Deckschicht(en) vorgesehene Holzstrands (Schritt 4b) in einer jeweils geeigneten Wasserbehandlungsvorrichtung an. Die Wasserbehandlung der Holzstrands erfolgt in einem Temperaturbereich zwischen 70° und 90°C.

Es ist auch möglich, dass lediglich die Holzstrands für die Mittelschicht einer Wasserbehandlung unterliegen, während die Holzstrands für die Deckschichten unbehandelt bleiben.

Nach Abschluss der Wasserbehandlung, die im vorliegenden Fall ca. 15-30 Minuten dauert, werden die wasserbehandelten Holzstrands getrocknet (Schritt 9a, 9b) und beleimt (Schritte 6 a,b).

Die beleimten wasserbehandelten Holzstrands werden auf ein Transportband in der Reihenfolge erste untere Deckschicht, Mittelschicht und zweite obere Deckschicht aufgestreut (Schritt 7) und anschließend zu einer OSB-Holzwerkstoffplatte verpresst (Schritt 8).

In der Endbearbeitung wird die erhaltene OSB-Holzwerkstoffplatte jeweils in geeigneter Weise konfektioniert.

### Ausführungsbeispiel 1:

Aus Kiefernstämmen werden Strands (Länge: max. 200 mm, Breite: 20 mm, Dicke: max. 1 mm, Feuchte: max. 50 %) erzeugt und in einem kontinuierlich arbeitenden Prozess mit 90°C heißem Wasser behandelt. Die Behandlung erfolgt in einem Behälter durch den die Strands langsam hindurchtransportiert werden. Durch Niederhalter wird sichergestellt, dass die Strands sich vollständig unter Wasser befinden. Die Behandlungsdauer/Verweilzeit im Becken beträgt ca. 15 min.

Das im Becken befindliche Wasser wird kontinuierlich aus dem Prozess ausgeschleust und durch Filtration von Schwebstoffen und feinen Partikeln befreit. Weiterhin werden die gelösten Bestandteile ausgefällt und das Wasser anschließend wieder dem Prozess zugeführt. Das ausgeschleuste Wasser hatte dabei einen CSB (chemischen Sauerstoffbedarf) von 700 mg/l. Damit ist es nur moderat mit organischen Verbindungen belastet und kann relativ einfach gereinigt werden.

Danach werden die Strands in einem Trommeltrockner getrocknet. Der Energiebedarf des Trommeltrockners reduziert sich dabei deutlich, da die Strands beim Eintritt in den Trockner bereits eine Temperatur von ca. 70°C haben. Dann werden sie in einem Coil mit PMDI beleimt (ca. 3 Gew% Leim auf Strands atro).

Die beleimten Stands werden in einer OSB-Anlage als Deck- und Mittelschicht gestreut. Die prozentuale Verteilung zwischen Mittel- und Deckschicht ist mindestens 70% zu 30%. Die Strands werden zu Platten verpresst, die eine Rohdichte von ca. 570 kg/m³ haben. Nach einer Lagerzeit von ca. einer Woche wurde die Versuchsplatte zusammen mit einer Standardplatte in gleicher Stärke in einer Microkammer auf die VOC-Abgabe geprüft.

**Kammerparameter:** Temperatur: 23°C; Feuchte: 0%; Luftdurchfluss: 150 ml/min; Luftwechsel: 188 / h; Beladung: 48,8 m²/m³; Probenoberfläche: 0,003 m²; Kammervolumen: 48 ml.

Die Werte der mengenmäßig wichtigsten Parameter sind in der folgenden Tabelle dargestellt.

| **Parameter** | **Versuchsplatte [µg/m² x h]** | **Standardplatte [µg/m² x h]** |
|---|---|---|
| Hexanal | 304 | 510 |
| 3-Carene | 220 | 461 |
| α-Pinene | 361 | 588 |
| Pentanal | 64 | 119 |
| β-Pinen | 214 | 425 |
| Aceton | 52 | 95 |

Wie aus der Tabelle zu entnehmen ist, ist eine deutliche Reduzierung der Emission bei den wichtigsten Parametern zu beobachten. Die Werte reduzieren sich etwa auf die Hälfte.

### Ausführungsbeispiel 2:

Aus Kiefernstämmen werden Strands (Länge: max. 200 mm, Breite: 20 mm, Dicke: max. 1 mm, Feuchte: max. 50 %) erzeugt und in einem kontinuierlich arbeitenden Prozess mit 70°C heißem Wasser behandelt. Die Behandlung erfolgt in einem Behälter durch den die Strands langsam hindurch transportiert werden. Durch Niederhalter wird sichergestellt, dass die Strands sich vollständig unter Wasser befinden. Die Behandlungsdauer/Verweilzeit im Becken beträgt ca. 30 min.

Das im Becken befindliche Wasser wird kontinuierlich aus dem Prozess ausgeschleust und durch Filtration von Schwebstoffen und feinen Partikeln befreit. Weiterhin werden die gelösten Bestandteile ausgefällt und das Wasser anschließend wieder dem Prozess zugeführt. Das ausgeschleuste Wasser hatte dabei einen CSB (chemischen Sauerstoffbedarf) von 545 mg/l. Damit ist es nur moderat mit organischen Verbindungen belastet und kann relativ einfach gereinigt werden.

Danach werden die Strands in einem Trommeltrockner getrocknet. Der Energiebedarf des Trommeltrockners reduziert sich dabei deutlich, da die Strands beim Eintritt in den Trockner bereits eine Temperatur von ca. 60°C haben. Dann werden sie in einem Coil mit PMDI beleimt (ca. 3 Gew% Leim auf Strands atro).

Die beleimten Stands werden in einer OSB-Anlage als Deck- und Mittelschicht gestreut. Die prozentuale Verteilung zwischen Mittel- und Deckschicht ist mindestens 70% zu 30%. Die Strands werden zu Platten verpresst, die eine Rohdichte von ca. 590 kg/m³ haben. Nach einer Lagerzeit von ca. einer Woche wurde die Versuchsplatte zusammen mit einer Standardplatte in gleicher Stärke in einer Microkammer auf die VOC-Abgabe geprüft.

**Kammerparameter:** Temperatur: 23°C; Feuchte: 0%; Luftdurchfluss: 150 ml/min; Luftwechsel: 188 / h; Beladung: 48,8 m²/m³; Probenoberfläche: 0,003 m²; Kammervolumen: 48 ml.

Die Werte der mengenmäßig wichtigsten Parameter sind in der folgenden Tabelle dargestellt.

| **Parameter** | **Versuchsplatte [µg/m² x h]** | **Standardplatte [µg/m² x h]** |
|---|---|---|
| Hexanal | 198 | 510 |
| 3-Carene | 171 | 461 |
| α-Pinene | 154 | 588 |
| Pentanal | 58 | 119 |
| β-Pinen | 17 | 425 |
| Aceton | 52 | 95 |

Durch die Verlängerung der Behandlungsdauer mit heißem Wasser ist eine deutliche Reduzierung der wichtigsten Parameter zu beobachten. Dies ist im Besonderen bei den Terpenen zu beobachten. Bei ihnen reduziert sich die Emission um bis zu 95%.

## Patentansprüche

1. Verfahren zur Herstellung von OSB-Holzwerkstoffplatten, insbesondere von OSB-Holzwerkstoffplatten mit reduzierter Emission an flüchtigen organischen Verbindungen (VOCs), umfassend die Schritte:
a) Herstellen von Holzstrands aus geeigneten Hölzern;
b) Behandeln von zumindest einem Teil der Holzstrands in Wasser bei einer Temperatur zwischen 50°C und 100°C über einen Zeitraum von 10 bis 60 min;
c) Trocknen der im Wasser behandelten Holzstrands;
d) Beleimen der mit Wasser behandelten und getrockneten Holzstrands und optional Beleimen von nicht mit Wasser behandelten Holzstrands mit mindestens einem Bindemittel;
e) Aufstreuen der beleimten Holzstrands auf ein Transportband; und
f) Verpressen der beleimten Holzstrands zu einer OSB-Holzwerkstoffplatte.

2. Verfahren nach Anspruch 1, **dadurch gekennzeichnet, dass** die Holzstrands in Wasser mit einer Temperatur zwischen 60°C und 90°C, insbesondere bevorzugt zwischen 70 und 90°C behandelt werden.

3. Verfahren nach einem der vorhergehenden Ansprüche, dass die Wasserbehandlung der Holzstrands über einen Zeitraum von 15 bis 45 min, insbesondere bevorzugt von 20 bis 30 min erfolgt.

4. Verfahren nach einem der vorhergehenden Ansprüche, **dadurch gekennzeichnet, dass** die Holzstrands während der Behandlung vollständig vom Wasser bedeckt sind, bevorzugt vollständig in das Wasser eingetaucht sind.

5. Verfahren nach einem der vorhergehenden Ansprüche, **dadurch gekennzeichnet, dass** die Holzstrands zur Wasserbehandlung auf mindestens einer Transportvorrichtung kontinuierlich durch eine das Wasser enthaltenden Vorrichtung durchgeführt werden.

6. Verfahren nach einem der vorhergehenden Ansprüche, **dadurch gekennzeichnet, dass** der Wasser nach Passieren der Holzstrands aus der Vorrichtung ausgeschleust wird.

7. Verfahren nach Anspruch 6, **dadurch gekennzeichnet, dass** das aus der Vorrichtung ausgeschleuste Wasser einem Reinigungsschritt unterzogen wird und in die Vorrichtung zurückgeführt wird.

8. Verfahren nach einem der vorhergehenden Ansprüche, **dadurch gekennzeichnet, dass** wasserbehandelte Holzstrands oder eine Mischung aus wasserbehandelten Holzstrands und nicht-wasserbehandelten Holzstrands als Mittelschicht und/oder Deckschicht der OSB-Holzwerkstoffplatte verwendet werden.

9. Verfahren nach einem der vorhergehenden Ansprüche, **dadurch gekennzeichnet, dass** der Schritt der Wasserbehandlung der Holzstrands separat vom Herstellungsprozess der OSB-Platten durchgeführt wird oder in den Herstellungsprozess der OSB-Platten integriert ist.

10. Verfahren nach einem der vorhergehenden Ansprüche, **dadurch gekennzeichnet, dass** die wasserbehandelten und nicht-wasserbehandelten Holzstrands mit einer Bindemittelmenge von 1,0 bis 5,0 Gew%, bevorzugt 2 bis 4 Gew%, insbesondere 3 Gew% (bezogen auf die Gesamtmenge der Holzstrands) beleimt werden.

11. Verfahren nach einem der vorhergehenden Ansprüche, **dadurch gekennzeichnet, dass** die beleimten Holzstrands bei Temperaturen zwischen 200 und 250°C, bevorzugt 220 und 230°C zu einer OSB-Holzwerkstoffplatte verpresst werden.

## Claims

1. Process for the production of OSB wood-based panels, in particular OSB wood-based panels with reduced emission of volatile organic compounds (VOCs), comprising the steps
(a) Production of wood strands from suitable timbers;
(b) Treatment of at least part of the wood strands in water at a temperature between 50°C and 100°C for a period of 10 to 60 minutes
(c) Drying of the wood strands treated in water;
(d) Coating of water-treated and dried wood strands and optionally coating of non-water-treated wood strands with at least one binder;
(e) Scattering the glue-coated wood strands onto a conveyor belt; and
f) Pressing the glue-coated wood strands to form an OSB wood-based panel.

2. Process according to claim 1, **characterized in that** the wood strands are treated in water at a temperature between 60°C and 90°C, in particular preferably between 70 and 90°C.

3. Process according to one of the preceding claims that the water treatment of the wood strands is carried out over a period of 15 to 45 minutes, preferably 20 to 30 minutes.

4. Process according to one of the preceding claims, **characterized in that** the wood strands are completely covered by the water during the treatment, preferably completely immersed in the water.

5. Process according to one of the preceding claims, **characterized in that** the wood strands for water treatment are continuously passed on at least one transport device through an apparatus containing the water.

6. Process according to one of the preceding claims, **characterized in that** the water is discharged from the apparatus after passage of the wood strands.

7. Process according to claim 6, **characterized in that** the water discharged from the apparatus is subjected to a purification step and is returned to the apparatus.

8. Process according to any of the preceding claims, **characterized in that** water-treated wood strands or a mixture of water-treated wood strands and non-water-treated wood strands are used as the middle layer and/or covering layer of the OSB wood-based panel.

9. Process according to any of the preceding claims, **characterized in that** the step of water treatment of the wood strands is carried out separately from the OSB board production process or is integrated into the OSB board production process.

10. Process according to one of the preceding claims, **characterized in that** the water-treated and non-water-treated wood strands are coated with a binder quantity of 1.0 to 5.0 % by weight, preferably 2 to 4 % by weight, in particular 3 % by weight (based on the total quantity of wood strands).

11. Process according to one of the preceding claims, **characterized in that** the glue-coated wood strands are pressed at temperatures between 200 and 250°C, preferably 220 and 230°C, to form an OSB wood-based panel.

## Revendications

1. Procédé de fabrication de panneaux à copeaux orientés en matériau dérivé du bois, en particulier de panneaux à copeaux orientés en matériau dérivé du bois avec une émission réduite de composés organiques volatiles (COV), comprenant les étapes :
a) de fabrication de copeaux de bois à partir de bois appropriés ;
b) de traitement d'au moins une partie des copeaux de bois dans de l'eau à une température entre 50 °C et 100 °C pendant une période de 10 à 60 min ;
c) de séchage des copeaux de bois traités dans l'eau ;
d) de collage des copeaux de bois traités avec de l'eau et séchés et de collage optionnel de copeaux de bois non traités avec de l'eau avec au moins un liant ;
e) de diffusion des copeaux de bois collés sur une bande de transport ; et
f) de compactage des copeaux de bois collés en un panneau à copeaux orientés en matériau dérivé du bois.

2. Procédé selon la revendication 1, **caractérisé en ce que** les copeaux de bois sont traités dans de l'eau à une température entre 60 °C et 90 °C, en particulier de préférence entre 70 et 90 °C.

3. Procédé selon l'une des revendications précédentes, **caractérisé en ce que** le traitement aqueux des copeaux de bois est effectué pendant une période de 15 à 45 min, en particulier de préférence de 20 à 30 min.

4. Procédé selon l'une des revendications précédentes, **caractérisé en ce que** les copeaux de bois sont couverts complètement par l'eau pendant le traitement, sont de préférence plongés complètement dans l'eau.

5. Procédé selon l'une des revendications précédentes, **caractérisé en ce que** les copeaux de bois sont passés pour le traitement aqueux sur au moins un dispositif de transport en continu par un dispositif contenant l'eau.

6. Procédé selon l'une des revendications précédentes, **caractérisé en ce que** l'eau est évacuée du dispositif après le passage des copeaux de bois.

7. Procédé selon la revendication 6, **caractérisé en ce que** l'eau évacuée du dispositif est soumise à une étape de nettoyage et est ramenée dans le dispositif.

8. Procédé selon l'une des revendications précédentes, **caractérisé en ce que** des copeaux de bois traités à l'eau ou un mélange de copeaux de bois traités à l'eau et de copeaux de bois non traités à l'eau sont utilisés en tant que couche médiane et/ou couche de recouvrement du panneau à copeaux orientés en matériau dérivé du bois.

9. Procédé selon l'une des revendications précédentes, **caractérisé en ce que** l'étape de traitement aqueux des copeaux de bois est réalisée séparément du processus de fabrication des panneaux à copeaux orientés ou est intégrée dans le processus de fabrication des panneaux à copeaux orientés.

10. Procédé selon l'une des revendications précédentes, **caractérisé en ce que** les copeaux de bois traités à l'eau et non traités à l'eau sont collés avec une quantité de liant de 1,0 à 5,0 % en poids, de préférence de 2 à 4 % en poids, en particulier de 3 % en poids (par rapport à la quantité totale des copeaux de bois).

11. Procédé selon l'une des revendications précédentes, **caractérisé en ce que** les copeaux de bois collés sont compactés à des températures entre 200 et 250 °C, de préférence 220 et 230 °C en un panneau à copeaux orientés en matériau dérivé du bois.
